Europäisches Patentamt

European Patent Office

Office européen des brevets

(19)

(11) Publication number: **0 283 710 B1**

## (12) EUROPEAN PATENT SPECIFICATION

(45) Date of publication of patent specification: **11.09.91**   (51) Int. Cl.⁵: **B65G 47/46, B65G 47/71**

(21) Application number: **88102289.1**

(22) Date of filing: **17.02.88**

(54) Distribution-transferring device for transferring articles onto a plurality of conveyors.

(30) Priority: **19.02.87 JP 23686/87**

(43) Date of publication of application:
**28.09.88 Bulletin 88/39**

(45) Publication of the grant of the patent:
**11.09.91 Bulletin 91/37**

(84) Designated Contracting States:
**AT BE CH DE ES FR GB IT LI NL SE**

(56) References cited:
**US-A- 3 465 870**

(73) Proprietor: **AB Tetra Pak**
**Rabyholms allé**
**Lund(SE)**

(72) Inventor: **Bergstrom, Anders**
**Vadmollan**
**SE 22590 Lund(SE)**

(74) Representative: **Glawe, Delfs, Moll & Partner**
**Patentanwälte**
**Postfach 26 01 62 Liebherrstrasse 20**
**W-8000 München 26(DE)**

Rank Xerox (UK) Business Services

**Description**

This device relates to a distribution-transferring device for distributing and transferring articles of a predetermined shape (generally packaging containers of longitudinal prism shape), which are conveyed one after another on a supplying conveyor, selectively onto one of a plurality of receiving conveyors in accordance with the final processes to which the articles are to be conveyed.

In a process for making articles of a predetermined shape, such as packaging containers of a brick or gable-topped shape, or of the arched side wall type, which contain liquid food, such as milk, juice or yoghurt, the articles usually are to be transferred from a main conveyor line onto other conveyor lines according to final processes which comprise attaching a small bag containing a straw or spoon, or gathering a predetermined number of them in a cardboard tray, or performing a shrinkage-packaging of several pieces each, etc.. In such cases, conventionally, the articles to be conveyed have been transferred from the first conveyor line onto other conveyor lines for other processes by respective transferring means differing with respective processes so that the articles are branched from the main conveyor one after another according to respective processes.

For such a conventional device, which transfers articles one after another from the original conveyor line onto respective conveyor lines arranged for final processes by different transferring means, it is necessary to arrange the same number of transferring means as that of final processes along the original one conveyor, requiring a vast space for installing these conveyors, and causing a problem of equipment investments necessary for the number of transferring means. The present device has been made with this point of view, and has the purpose of providing a distribution-transferring device for articles to be transferred selectively onto a plurality of conveyors, which solves the afore-mentioned problem by making it possible to perform the distribution of articles to be conveyed onto many conveyors lines at one place.

The device according to the invention has the features defined in claim 1. Preferred features are defined in the dependent claims.

In the present device, when, being held in a state of standing upright on the conveyor normally, the articles are conveyed one after another for being distributed in accordance with the final processes, the distribution unit is made to move at any time in compliance with the final processes such that the chute (9) of the distribution unit is positioned above a desired conveyor line for the final process, and the articles on the conveyor, which are received by the receiving inlet of the deflecting change-over member (7) of the distribution unit and are made to change direction by 90°, to slide down the chute and to be smoothly transferred onto the above-mentioned desired conveyor line for the final process.

An embodiment of the invention will be described with reference to the drawings.

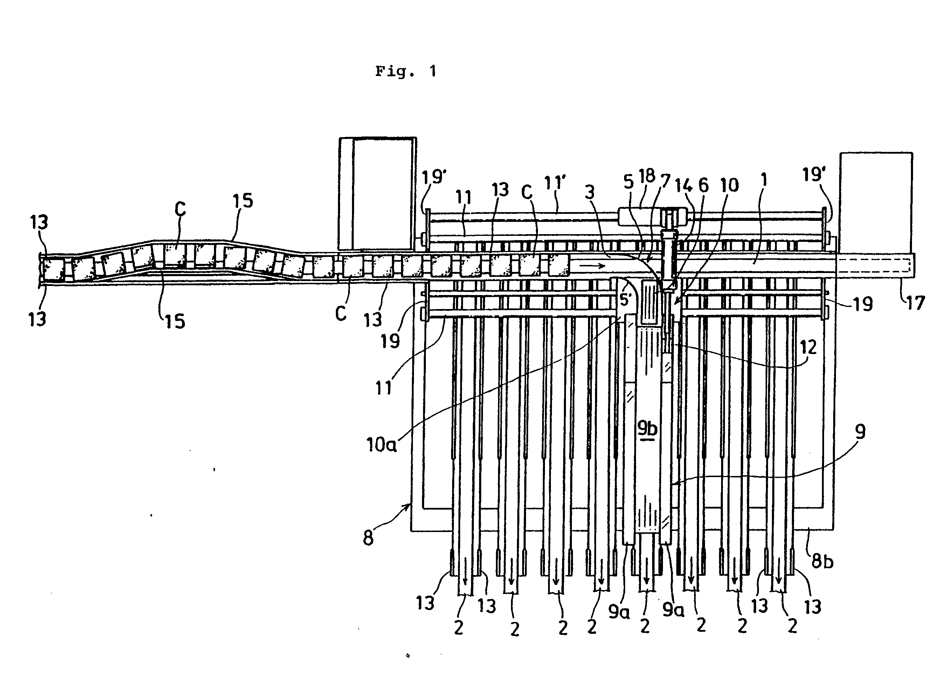

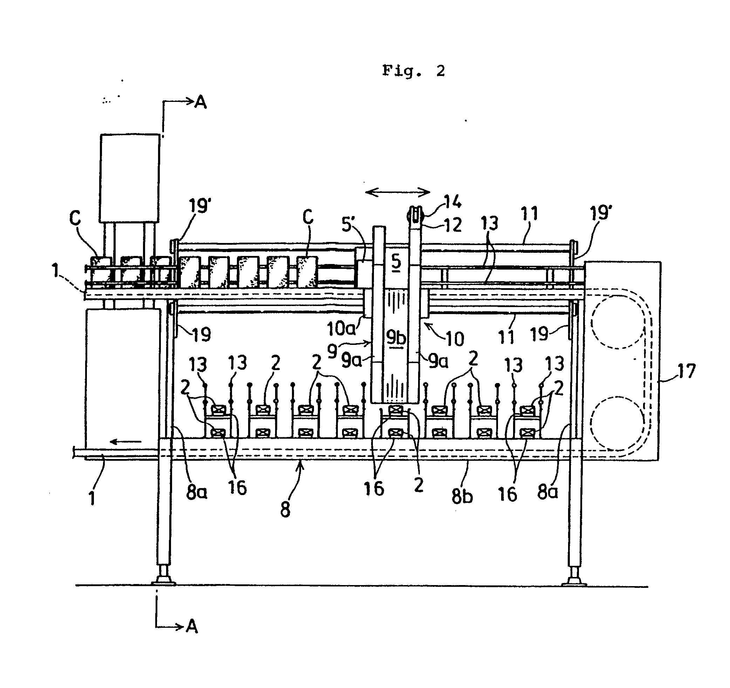

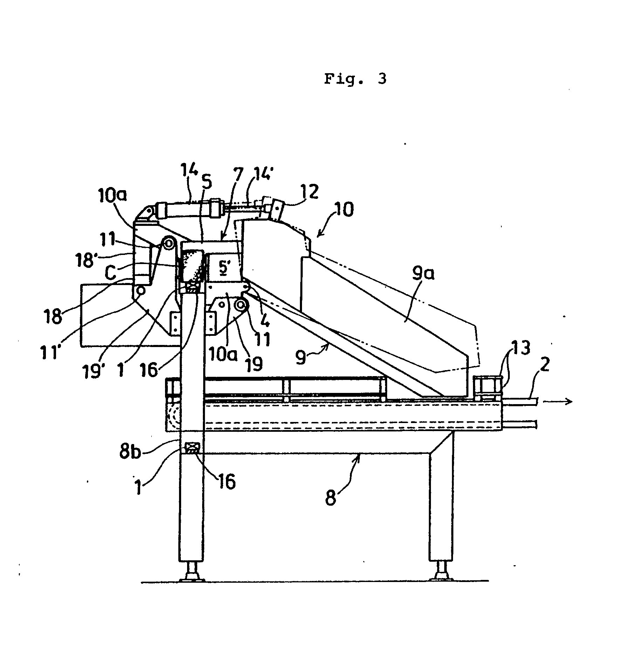

Fig. 1 is a plan view of a device according to the present device, Fig. 2 is a front view of a main portion in Fig. 1, and Fig. 3 is a longitudinal section side view taken along line A - A in Fig. 2.

The articles to be transferred, have a longitudinal prism shape and may consist of a paper package containing liquid food, such as milk and juice. These articles are conveyed on a conveyor (1) continuously one after another. Conveyor (1) having flat conveying surface is in the form of endless belt, though not illustrated in detail, and performs a circular movement on conveyor supporting plates (16) (refer to fig. 3), which are disposed on the upper and lower levels at one side of a base frame main body (8); the circular movement is such that the conveyor (1) changes its direction while being inside an end part cover (17), which is provided on the base frame (8) and which allows the conveyor (1) to make a U-turn. The articles (C) are conveyed on the upper conveyor strand travelling over the upper stage.

On the travelling strand of the conveyor (1), before moving into the upper part of the base frame main body (8) according to the present device, a pair of girders (15) for aligning the side wall faces of the articles (C) are provided facing to each other and forming a passageway, which has a portion laterally deflected from the center line of conveyor (1). This has the effect that the articles (C) are moved to one side (left side) of the conveyor travelling direction before being returned back to the center line of the conveyor strand. These deflecting girders (15) are a continuation of straight guide bars (13) which are provided on both sides of the conveyor (1).

Two such deflecting girders (15) are provided one above the other on right side as seen in the travelling direction, whereas the lower deflecting girder is omitted on the right side in the traversing direction, which is the side to which the articles are to be distributed.

When articles (C) are conveyed between the afore-mentioned girders (15) for aligning their side wall faces the articles are deviated to the left and shifted across the surface of the conveyor (1) so that the articles are still supported by the conveyor (1) but project over the lateral edge thereof to such an extent that the gravity centers of articles (C) lie outside the conveyor (1). At the end of the deflecting section formed by the girders (15), the articles standing upright in the normal position engage the upper girder (15) and are deflected back fully onto the conveyor (1), with their left lateral side faces (as seen in the travelling direction) all being aligned along the left girder (15) and following guide bar (3). However, articles which have fallen and lie flat on the conveyor (1) cannot engage the upper girder (15), and as a lower girder (15) is missing on the left side, such an article lying flat will be arranged to slip out of the girder arrangement on the left side and will fall off the conveyor (1). Thus, articles which are not in the normal upright position are prevented from entering into the distributing and transferring device.

Under a portion of the conveying strand of conveyor (1) before the above-mentioned terminating end thereof, and at a level above returning strand of said conveyor (1) on girders (8b) and (8b) of the base frame main body (8), a plurality of lines of conveyors (2) also having flat conveying surfaces are disposed parallel and closely adjacent to one another such that the directions of the conveyors (2) are at right angles to the travelling direction of conveyor (1) positioned thereabove, and these conveyors make a circular movement on conveyor supporting plates (16) and (16) on upper and lower levels. The articles (c) are conveyed from the afore-mentioned first or supplying conveyor (1) onto the upper surface of anyone of conveyors (2) after sliding down along a chute (9) of the distribution unit (10), which is later described.

On both sides of the travelling strand for each one of the plurality of lines of conveyors (2), guide pipes (13) are disposed for restricting and guiding the directions of the articles. Onto a pair of base frame supports (8a) and (8a), positioned on the left and right and supporting the conveying strand of the supplying conveyor (1) on the upper part of base frame main body (8), upper and lower guide bars (11) are disposed such that the passageway for the conveyor (1) is interposed between frame plates (19) and (19') provided on respective base frame supports. The distribution unit (10) for distributing the articles (C) onto the afore-mentioned plurality of conveyors (2) is provided slidably on said guide bars (11) and (11) in both the left and right directions by means of sliding frame plates (10a) and (10a'). Above the sliding frame plate (10a), a travelling direction deflecting member (7) is composed of a pair of arcuate guide side plates (5) and (5'), facing each other, and a skidding surface plate (6) for skidding and guiding articles (C); these parts are arranged such that they form a receiving inlet for the articles (C) facing and open on the travelling direction of conveyor (1), for changing the travelling direction of the articles to be conveyed to the travelling direction of the plurality of conveyors (2). The articles (C) are arranged, while being conveyed to the conveyor (1), to change their directions by 90° and pass over the skidding surface plate (6), and a chute (9) is connected via a hinge joint (4), slidable on the sliding frame plate (10a), for allowing the articles (C) to continuously slide down onto the conveyors (2).

The chute (9) is provided with side walls (9a) and (9a), facing each other and arranged on both sides of central sliding block plate (9b). At a bracket (12) on top of the side wall (9a) on one side of said chute (9) there is connected the piston rod (14') of a pneumatic cylinder (14) which itself is mounted at the opposite side to an end part of sliding frame plate (10a') for oscillating the chute (9), vertically so that it can be slightly lifted by blowing air into the cylinder (14). As in the case with the afore-mentioned guide bars (11) and (11), an auxiliary guide bar (11') is provided in parallel with said guide bars, and an auxiliary sliding member (18) is fixed to the afore-mentioned sliding frame plate (10a') opposite to the chute (9) via a support member (18'), being provided slidably on the auxiliary guide bar (11'). A magnetic element is incorporated into the auxiliary guide bar (11') and auxiliary sliding member (18) to form a rodless cylinder device for electromagnetically moving the distribution unit (10) to the left and right wall.

It is also possible to manually move the distribution unit (10) to the left and right by using the support member (18'), etc..

In the present device, when it is desired to change the conveyor line and thus the final process to which the articles are conveyed, compressed air is supplied to the cylinder (14) of distribution unit (10) to lift the lower part of chute (9) from the traversing trucks of a conveyor (2) and then the distribution unit (10) is moved above a desired one of the conveyors (2) and the chute (9) is again lowered to the conveyor surface. The articles (C) are transferred onto the desired conveyor line for the final processes.

In accomodation to the arrangement of guide pipes or any other circumstances, the chute (9) may also be fixedly arranged instead of being slidable, and provided with a horizontal pivot to enable the chute to move to the left and right similarly, eliminating a cylinder, etc..

## Claims

1. A distributing-transferring device for transferring articles conveyed on a supplying conveyor selectively onto one of a plurality of receiving conveyors, **characterized** in that the starting end parts of the receiving conveyors (2) are arranged side by side under the conveying run of the supplying conveyor (1) with the travelling direction of the receiving conveyors (2) being substantially at right angles to that of the supplying conveyor (1), and in that
a distributing unit (10) is provided having an inlet (3) disposed above said supplying conveyor (1) and facing the travelling direction of incoming articles thereon, a deflecting member (7) for deflecting the articles enterring the inlet (3) away from said supplying conveyor (1) by substantially 90° into the travelling direction of said receiving conveyors (2), and an outlet (9) for releasing the deflected articles onto one of said receiving conveyors (2),
and that said distributing unit (10) is movable in parallel to the travelling direction of said supplying conveyor (1) for positioning said outlet (9) over a selected one of said receiving conveyors (2).

2. A device according to claim 1, **characterized** in that the deflecting part (7) of said distributing unit (10) comprises two arcuate guide walls (5, 5') engaging the side faces of the articles and a skidding plate (6) arranged adjacent to the lateral edge of the supplying conveyor (1) for supporting the bottom faces of the articles deflected from the supplying conveyor.

3. A device according to claim 1 , **characterized** in that said outlet comprises a chute (9) extending from the level of the conveying run of the supplying conveyor (1) down to the level of the receiving conveyor (2).

4. A device according to claim 3 , **characterized** in that said chute (9) is hinged to the distributing unit (10) for vertical swinging movement.

5. A device according to claim 4 , **characterized** in that the chute (9) can be raised and lowered by means of an adjusting device such as a power cylinder (14).

6. A device according to claim 1 , **characterized** in that said distributing unit (10) is displacably mounted to guide bars (11, 11') which are provided in parallel with the travelling direction of the supplying conveyor (1).

7. A device according to claim 1 , **characterized** in that the supplying conveyor (1) has lateral guide bars (13, 15) extending in parallel with the conveyor on both sides thereof for guiding the side faces of the articles,
that on one side of the conveyor (1), which is the side to which the articles are to be deflected by the distributing unit (10), said guide bars (13) terminate at the point of entrance of the conveyor (1) into the distributing unit (10)-,and that upstream of said point of entrance the guide bars (15) form a lateral deflection to the other side of that conveyor (1) to force the articles (C) into engagement with the guide bars (15) on said other side.

8. A device according to claim 7 in combination with articles being conveyed, **characterized** in that the amount of said lateral deflection is such that more than half of each the articles is moved outside of the width of the supplying conveyor (1), and that at the outer side of said deflection said guide bars (15) are arranged at a level which is higher than the height of an article which has fallen flat out of its normal upright position.

## Revendications

1. Dispositif de distribution-transfert destiné à transférer des articles transportés sur un transporteur d'alimentation sélectivement sur l'un de plusieurs transporteurs de réception, caractérisé en ce que les parties extrêmes de départ des transporteurs (2) de réception sont disposées côte à côte sous le brin de transport du transporteur (1) d'alimentation, la direction de déplacement des transporteurs (2) de réception étant sensiblement perpendiculaire à celle du transporteur (1) d'alimentation, en ce que
une unité (10) de distribution est prévue, comportant une entrée (3) disposée au-dessus dudit transporteur (1) d'alimentation et faisant face à la direction de déplacement d'articles arrivant sur ce transporteur, un élément (7) de déviation destiné à dévier les articles entrant dans l'entrée (3) à l'écart dudit transporteur (1) d'alimentation de sensiblement 90° pour les amener dans la direction de déplacement desdits transporteurs (2) de réception, et une sortie (9) destinée à libérer les articles déviés sur l'un desdits transporteurs (2) de réception,
et en ce que ladite unité (10) de distribution peut être déplacée parallèlement à la direction de déplacement dudit transporteur (1) d'alimentation pour positionner ladite sortie (9) au-dessus de l'un, choisi, desdits transporteurs (2) de réception.

2. Dispositif selon la revendication 1, caractérisé en ce que la partie (7) de déviation de ladite unité (10) de distribution comporte deux parois de guidage incurvées (5, 5') engageant les faces latérales des articles et une plaque de glissement (6) disposée à proximité immédiate du bord latéral du transporteur (1) d'alimentation afin de supporter les faces inférieures des articles déviés depuis le transporteur d'alimentation.

3. Dispositif selon la revendication 1, caractérisé en ce que ladite sortie comporte une goulotte (9) descendant depuis le niveau du brin de transport du transporteur (1) d'alimentation jusqu'au niveau du transporteur (2) de réception.

4. Dispositif selon la revendication 3, caractérisé en ce que ladite goulotte (9) est articulée sur l'unité (10) de distribution afin d'effectuer un mouvement pivotant vertical.

5. Dispositif selon la revendication 4, caractérisé en ce que la goulotte (9) peut être élevée et abaissée au moyen d'un dispositif de réglage tel qu'un cylindre de commande (14).

6. Dispositif selon la revendication 1, caractérisé en ce que ladite unité (10) de distribution est montée de façon à pouvoir être déplacée sur des barres (11, 11') de guidage qui sont disposées parallèlement à la direction de déplacement du transporteur (1) d'alimentation.

7. Dispositif selon la revendication 1, caractérisé en ce que le transporteur (1) d'alimentation comporte des barres latérales (13, 15) de guidage s'étendant parallèlement au transporteur sur ses deux côtés pour guider les faces latérales des articles,

en ce que, sur un côté du transporteur (1), qui est le côté par lequel les articles doivent être déviés par l'unité (10) de distribution, lesdites barres (13) de guidage aboutissent au point d'entrée du transporteur (1) dans l'unité (10) de distribution,

et en ce qu'en amont dudit point d'entrée, les barres (15) de guidage forment une déviation latérale vers l'autre côté du transporteur (1) pour amener à force les articles (C) en contact avec les barres de guidage (15) sur ledit autre côté.

8. Dispositif selon la revendication 7 en combinaison avec des articles transportés, caractérisé en ce que l'amplitude de ladite déviation latérale est telle que plus de la moitié de chacun des articles est sortie de la largeur du transporteur (1) d'alimentation, et en ce que, du côté extérieur de ladite déviation, lesdites barres (15) de guidage sont disposées à un niveau qui est plus élevé que la hauteur d'un article qui est tombé à plat de sa position normale debout.

**Patentansprüche**

1. Verteilungs- und Übergabevorrichtung zum wahlweisen Übergeben von Gegenständen, die auf einem Zuführförderband zugeführt worden sind, auf eines von mehreren Aufnahmeförderbändern, dadurch **gekennzeichnet,** daß die Anfangsenden der Aufnahmeförderbänder (2) nebeneinander unterhalb der Förderbahn des Zuführförderbandes (1) angeordnet sind, wobei die Laufrichtung des Zuführförderbandes (1) mit der Laufrichtung der Aufnahmeförderbänder (2) im wesentlichen rechte Winkel einschließt, und daß eine Verteilerbaueinheit (10) vorgesehen ist, deren Eingang (3) oberhalb des Zuführförderbandes (1) liegt und der Laufrichtung der darauf ankommenden Gegenstände zugewandt ist, mit einem Ablenkelement (7) zum Ablenken der Gegenstände, die in den Eingang (3) eintreten, weg von dem Zuführförderband (1) um im wesentlichen 90° in die Laufrichtung der Aufnahmeförderbänder 2, und einem Ausgang (9) zum Freigeben der abgelenkten Gegenstände auf eines der Aufnahmeförderbänder (2), und daß die Verteilerbaueinheit (10) parallel zur Laufrichtung des Zuführförderbandes (1) verschiebbar ist, um den Ausgang (9) über dem einen ausgewählten Aufnahmeförderband (2) zu positionieren.

2. Vorrichtung nach Anspruch 1, dadurch **gekennzeichnet,** daß der Ablenkteil (7) der Verteilerbaueinheit (10) zwei bogenförmige Führungswände (5, 5'), die die Seitenflächen der Gegenstände berühren aufweist, und daß in der Nähe der Seitenkante des Zuführ-Fördergurtes (1) eine Schiebeplatte (6) angeordnet ist, um die Bodenflächen der von dem Zuführförderband abgelenkten Gegenstände zu tragen.

3. Vorrichtung nach Anspruch 1, dadurch **gekennzeichnet,** daß der Ausgang eine Rutsche (9) aufweist, die von der Höhe der Förderbahn des Zuführförderbandes (1) nach unten bis auf die Höhe des Aufnahmeförderbandes (2) reicht.

4. Vorrichtung nach Anspruch 3, dadurch **gekennzeichnet,** daß die Rutsche (9) an der Verteilerbaueinheit (10) für eine vertikale Schwingbewegung angelenkt ist.

5. Vorrichtung nach Anspruch 4, dadurch **gekennzeichnet,** daß die Rutsche (9) mittels einer Einstelleinrichtung, wie einem Kraftzylinder (14), angehoben und abgesenkt werden kann.

6. Vorrichtung nach Anspruch 1, dadurch **gekennzeichnet,** daß die Verteilerbaueinheit (10) an Führungsstangen (11, 11'), die parallel zur Laufrichtung des Zuführförderbandes (1) vorgesehen sind, verschiebbar montiert ist.

7. Vorrichtung nach Anspruch 1, dadurch **gekennzeichnet,** daß das Zuführförderband (1) seitliche Führungsstangen (13, 15) aufweist, die parallel zum Förderband auf beiden Seiten desselben liegen, um die Seitenflächen der Gegenstände zu führen;
daß an einer Seite des Förderbandes (1), welche die Seite ist, an der die Gegenstände durch die Verteilerbaueinheit (10) abgelenkt werden, die Führungsstange (13) an dem Eintrittspunkt des Förderbandes (1) in die Verteilerbaueinheit (10) endet, und daß in Laufrichtung oberhalb dieses Eintrittspunktes die Führungsstangen (15) eine seitliche Ablenkung zur anderen Seite dieses Förderbandes (1) bilden, um die Gegenstände (C) in Berührung mit der Führungsstange (15) auf der anderen Seite zu bringen.

8. Vorrichtung nach Anspruch 7 in Kombination damit, daß die Gegenstände transportiert werden, dadurch **gekennzeichnet,** daß das Maß der seitlichen Ablenkung so ist, daß mehr als die Hälfte jedes Gegenstandes (1) über die Breite des Zuführförderbandes (1) hinaus verschoben ist, und daß an der anderen Seite dieser Ablenkung die Führungsstangen (15) auf einer Höhe angeordnet sind, die höher als die Höhe eines Gegenstandes ist, wenn dieser aus seiner normalen aufrechten Position flach umgefallen ist.

## Fig. 1

EP 0 283 710 B1

Fig. 2

Fig. 3